# EUROPEAN PATENT APPLICATION

(11) **EP 4 759 559 A1**
(43) Date of publication of application: **17.06.2026**
(21) Application number: 25216259.9
(22) Date of filing: 17.11.2025
(51) Int. Cl.: B60C 1/00, C08L 9/06

(54) **THERMOPLASTIC URETHANES IN RACING TIRE COMPOSITIONS**

(30) Priority: 02.12.2024 US 202418965450
(71) Applicant: The Goodyear Tire & Rubber Company, Akron, OH 44316 (US)
(72) Inventor: LUDWIG, Steve, L-7750 Colmar-Berg (LU); BARRETT, Gary Terence, Sutton Coldfield, B73 5LZ (GB); Bier, Ann Katharina, L-7750 Colmar-Berg (LU); SPRINGER, Björn, D-63486 Bruchköbel (DE)
(74) Representative: Kutsch, Bernd

(57) **Abstract**

A rubber composition comprising one or more thermoplastic polyurethanes and at least 75 parts per hundred rubber (phr) of one or more solution-polymerized styrene butadiene rubbers is disclosed. The rubber composition may be used in a tire.

## Description

### BACKGROUND

The demand for improved tire performance has resulted in the development and evaluation of new materials that have desirable properties. Improving tire properties such as rolling resistance while maintaining the balance in tradeoffs can be challenging. There is a need for rubber formulations that have a balance between processability, low tire rolling resistance, and good hardness and/or elongation properties. These needs and other needs are satisfied by the present invention.

### SUMMARY OF THE INVENTION

The invention relates to a rubber composition in accordance with claim 1, and to a tire in accordance with claim 13.

Dependent claims refer to preferred embodiments of the invention.

In accordance with the purpose(s) of the invention, as embodied and broadly described herein, the invention, in one aspect, relates to a composition, comprising: a concentration of one or more thermoplastic polyurethanes; and at least 75 parts per hundred rubber (phr) of one or more solution-polymerized styrene butadiene rubbers. Also disclosed herein are tires comprising the disclosed compositions.

### BRIEF DESCRIPTION OF THE FIGURES

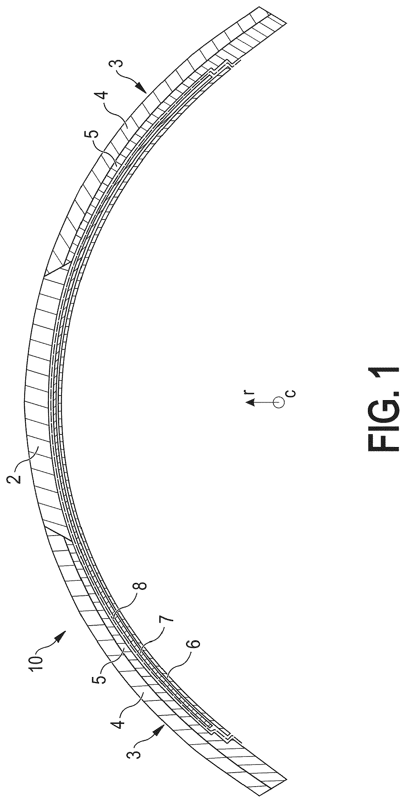

FIG. 1 shows a schematic partial cross section of a motorcycle tire tread as well as underlying reinforcing reinforced rubber plies, in accordance with an embodiment of the present invention.

### DETAILED DESCRIPTION OF PREFERRED EMBODIMENTS OF THE INVENTION

### A. DEFINITIONS

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used herein, nomenclature for compounds, including organic compounds, can be given using common names, IUPAC, IUBMB, or CAS recommendations for nomenclature.

When one or more stereochemical features are present, Cahn-Ingold-Prelog rules for stereochemistry can be employed to designate stereochemical priority, E/Z specification, and the like. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

As used in the specification and the appended claims, the singular forms "a," "an" and "the" include plural referents unless the context clearly dictates otherwise. Thus, for example, reference to "a filler," "an oil," or "a fatty acid," includes, but is not limited to, two or more such fillers, oils, or fatty acids, and the like.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

The terms "rubber" and "elastomer" may be used herein interchangeably, unless indicated otherwise.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In some aspects, the uncured rubber composition is a masterbatch.

Unless otherwise specified, temperatures referred to herein are based on atmospheric pressure (i.e. one atmosphere).

### B. RUBBER COMPOSITIONS

In one aspect, the invention relates to a composition, such as an uncured or cured rubber composition, comprising: a concentration of one or more thermoplastic polyurethanes; and one or more solution-polymerized styrene butadiene rubbers (SSBRs). More specifically, in one aspect, the present invention further relates to a composition, comprising: a concentration of one or more thermoplastic polyurethanes (TPUs); and at least 75 parts per hundred rubber (phr) of one or more solution-polymerized styrene butadiene rubbers. The present invention also relates to articles, such as tires and/or components of tires, comprising the compositions. Thermoplastic urethanes (TPUs) are not typically used in conventional rubber compositions used in tire production. They are typically used as dampers in industrial applications or other applications utilizing a polymer formulation having a need for enhanced damping properties. The disclosed rubber compositions comprising TPUs and at least one solution-polymerized styrene butadiene rubber can be used to produce a tire, such as a racing tire, with a relatively high level of dry grip performance and other desirable properties, such as relatively low sensitivity to ambient temperatures and/or better track wear.

The one or more SSBRs can be present in the composition in an amount of at least 75 phr, at least 80 phr, at least 85 phr, at least 90 phr, at least 95 phr, or at least 100 phr. In another aspect, the one or more SSBRs can be present in the composition in an amount of no more than 75 phr, no more than 80 phr, no more than 85 phr, no more than 90 phr, no more than 95 phr, no more than 100 phr, or no more than 110 phr. In another aspect, the one or more SSBRs can be present in the composition in an amount of from 75 phr to 80 phr, from 75 phr to 85 phr, from 75 phr to 90 phr, from 75 phr to 95 phr, from 75 phr to 100 phr, from 75 phr to 105 phr, from 75 phr to 110 phr, or individual values or subranges of the foregoing.

The TPUs can be present in the composition in an amount of from 5 phr to 25 phr, from 10 phr to 25 phr, from 15 phr to 25 phr, from 20 phr to 25 phr, from 10 phr to 25 phr, from 10 phr to 20 phr, from 10 phr to 15 phr, from 5 phr to 20 phr, from 5 phr to 15 phr, from 5 phr to 10 phr, or individual values or subranges of the foregoing. In another aspect, the TPUs can be present in an amount of 5 phr, 6 phr, 7 phr, 8 phr, 9 phr, 10 phr, 11 phr, 12 phr, 13 phr, 14 phr, 15 phr, 16, 17 phr, 18 phr, 19 phr, 20 phr, 21 phr, 22 phr, 23 phr, 24 phr, or 25 phr.

The TPUs can comprise a polyester polymer block or derivative thereof. In another aspect, the TPUs can comprise a polyether polymer block or derivative thereof. The one or more TPUs present in the composition can be characterized by various physical or mechanical properties such as density, tensile strength, elongation at break, and/or hardness (i.e., resistance to deformation or indentation). When more than one TPU is present in the composition, the various TPUs can be the same TPU, with the same properties, or a different TPU that varies in at least one physical or mechanical property (e.g., density, tensile strength, elongation at break, and/or hardness).

In one aspect, the rubber composition can comprise one or more TPUs having a density from 1.00 g/cm³ to 1.30 g/cm³; from 1.00 g/cm³ to 1.25 g/cm³; from 1.00 g/cm³ to 1.20 g/cm³; from 1.00 g/cm³ to 1.15 g/cm³; from 1.00 g/cm³ to 1.10 g/cm³; from 1.05 g/cm³ to 1.30 g/cm³; from 1.05 g/cm³ to 1.25 g/cm³; from 1.05 g/cm³ to 1.20 g/cm³; from 1.05 g/cm³ to 1.15 g/cm³; from 1.05 g/cm³ to 1.10 g/cm³; from 1.10 g/cm³ to 1.30 g/cm³; from 1.10 g/cm³ to 1.25 g/cm³; from 1.10 g/cm³ to 1.20 g/cm³; or from 1.10 g/cm³ to 1.15 g/cm³; or individual values or subranges of the foregoing. For example, in a further aspect, the rubber composition comprises one or more TPU having density of 1.00 g/cm³, 1.01 g/cm³, 1.02 g/cm³, 1.03 g/cm³, 1.04 g/cm³, 1.05 g/cm³, 1.10 g/cm³, 1.11 g/cm³, 1.12 g/cm³, 1.13 g/cm³, 1.14 g/cm³, 1.15 g/cm³, 1.16 g/cm³, 1.17 g/cm³, 1.18 g/cm³, 1.19 g/cm³, 1.20 g/cm³, 1.21 g/cm³, 1.22 g/cm³, 1.23 g/cm³, 1.24 g/cm³, or 1.25 g/cm³; or ranges comprising one the foregoing as a lower limit and another of the foregoing as an upper limit.

In one aspect, the rubber composition can comprise one or more TPUs having a tensile strength from 10 MPa to 50 MPa, from 10 MPa to 45 MPa, 10 MPa to 40 MPa, 10 MPa to 35 MPa, 10 MPa to 30 MPa, 10 MPa to 25 MPa, 10 MPa to 20 MPa, 10 MPa to 20 MPa, 15 MPa to 50 MPa, from 15 MPa to 45 MPa, 15 MPa to 40 MPa, 15 MPa to 35 MPa, 15 MPa to 30 MPa, 15 MPa to 25 MPa, 15 MPa to 20 MPa, 20 MPa to 50 MPa, from 20 MPa to 45 MPa, 20 MPa to 40 MPa, 20 MPa to 35 MPa, 20 MPa to 30 MPa, 20 MPa to 25 MPa, 25 MPa to 50 MPa, from 25 MPa to 45 MPa, 25 MPa to 40 MPa, 25 MPa to 35 MPa, 25 MPa to 30 MPa, or individual values or subranges of the foregoing. For example, in a further aspect, the rubber composition can comprise one or more TPUs having a tensile strength of 10 MPa, 15 MPa, 20 MPa, 25 MPa, 30 MPa, 35 MPa, 40 MPa, 45 MPa, or 50 MPa; or ranges comprising one the foregoing as a lower limit and another of the foregoing as an upper limit.

In another aspect, the rubber composition can comprise one or more TPUs having an elongation at break percentage from 700 percent to 1200 percent; 700 percent to 1100 percent; 700 percent to 1000 percent; 700 percent to 900 percent; 700 percent to 800 percent; 800 percent to 1200 percent; 800 percent to 1100 percent; 800 percent to 1000 percent; 800 percent to 900 percent; 900 percent to 1200 percent; 900 percent to 1100 percent; 900 percent to 1000 percent; or individual values or subranges of the foregoing. For example, in a further aspect, the rubber composition comprises one or more TPU having an elongation at break percentage of 700 percent; 750 percent; 800 percent; 850 percent; 900 percent; 950 percent; 1000 percent; 1050 percent; 110 percent; 1150 percent; or 1200 percent; or ranges comprising one the foregoing as a lower limit and another of the foregoing as an upper limit.

In another aspect, the rubber composition can comprise one or more TPU having a hardness from 30 Shore A to 90 Shore A; 30 Shore A to 85 Shore A; from 30 Shore A to 80 Shore A; 30 Shore A to 75 Shore A; 30 Shore A to 70 Shore A; 30 Shore A to 65 Shore A; from 30 Shore A to 60 Shore A; 30 Shore A to 55 Shore A; 30 Shore A to 50 Shore A; 30 Shore A to 45 Shore A; 30 Shore A to 40 Shore A; 35 Shore A to 90 Shore A; 35 Shore A to 85 Shore A; from 35 Shore A to 80 Shore A; 35 Shore A to 75 Shore A; 35 Shore A to 70 Shore A; 35 Shore A to 65 Shore A; from 35 Shore A to 60 Shore A; 35 Shore A to 55 Shore A; 35 Shore A to 50 Shore A; 35 Shore A to 45 Shore A; 35 Shore A to 40 Shore A; 40 Shore A to 90 Shore A; 40 Shore A to 85 Shore A; from 40 Shore A to 80 Shore A; 40 Shore A to 75 Shore A; 40 Shore A to 70 Shore A; 40 Shore A to 65 Shore A; from 40 Shore A to 60 Shore A; 40 Shore A to 55 Shore A; 40 Shore A to 50 Shore A; or 40 Shore A to 45 Shore A; or individual values or subranges of the foregoing. For example, in a further aspect, the rubber composition comprises one or more TPU having a hardness of 30 Shore A; 35 Shore A; 30 Shore A; 40 Shore A; 45 Shore A; 50 Shore A; 55 Shore A; 60 Shore A; 65 Shore A; 70 Shore A; 75 Shore A; 80 Shore A; 85 Shore A; or 90 Shore A; or ranges comprising one the foregoing as a lower limit and another of the foregoing as an upper limit.

The compositions disclosed herein can further comprise additional components such as a residual aromatic extract oil and/or a filler. In a further aspect, the filler can comprise carbon black. In a still further aspect, the filler can consist essentially of carbon black. In another aspect, the residual aromatic extract oil can be included in the composition in lieu of other processing oils, such as mineral oils.

In a further aspect, the present invention relates to a rubber composition, comprising: one or more TPUs, one or more solution-polymerized styrene butadiene rubbers; and a filler. The filler can be present in an amount of from 35 phr to 150 phr; from 40 phr to 150 phr; from 45 phr to 150 phr; from 50 phr to 150 phr; from 55 phr to 150 phr; from 60 phr to 150 phr; from 65 phr to 150 phr; from 70 phr to 150 phr; from 75 phr to 150 phr; from 80 phr to 150 phr; from 85 phr to 150 phr; from 90 phr to 150 phr; or from 95 phr to 150 phr. For example, in a further aspect, the rubber composition can comprise the filler in an amount of 40 phr, 45 phr, 50 phr, 55 phr, 60 phr, 65 phr, 70 phr, 75 phr, 80 phr, 85 phr, 90 phr, 95 phr, 100 phr, 105 phr; or ranges comprising one the foregoing as a lower limit and another of the foregoing as an upper limit. In another aspect, the rubber composition can comprise the filler in an amount of at least 30 phr; at least 35 phr; at least 40 phr, at least 45 phr, at least 50 phr, at least 55 phr, at least 60 phr, at least 65 phr, at least 70 phr, at least 75 phr, at least 80 phr, at least 85 phr, at least 90 phr, or at least 95 phr.

In another aspect, the present invention relates to a rubber composition, comprising: one or more TPUs and a one or more solution-polymerized styrene butadiene rubbers; and further comprising a residual aromatic extract oil. The residual aromatic extract oil can be present in an amount from 1 phr to 50 phr; from 1 phr to 45 phr; from 1 phr to 40 phr; from 1 phr to 35 phr; from 1 phr to 30 phr; from 1 phr to 25 phr; from 1 phr to 20 phr; from 5 phr to 50 phr; from 5 phr to 45 phr; from 5 phr to 40 phr; from 5 phr to 35 phr; from 5 phr to 30 phr; from 5 phr to 25 phr; from 5 phr to 20 phr; from 10 phr to 50 phr; from 10 phr to 45 phr; from 10 phr to 40 phr; from 10 phr to 35 phr; from 10 phr to 30 phr; from 10 phr to 25 phr; from 10 phr to 20 phr; or individual values or subranges of the foregoing. For example, in a further aspect, the rubber composition further comprises the residual aromatic extract oil selected from 1 phr, 5 phr, 10 phr, 15 phr, 20 phr, 25 phr, 30 phr, 35 phr, 40 phr, 35 phr, 40 phr, 45 phr, and 50 phr; or ranges comprising one the foregoing as a lower limit and another of the foregoing as an upper limit.

The composition can further comprise other commonly used additive materials such as: curing or vulcanizing agents, such as sulfur donors; curing aids, such as activators, accelerators, and retarders; processing additives, such as oils, resins (including tackifying resins or agents), and plasticizers; additional fillers, such as silica; pigments; fatty acids; zinc oxide; waxes; antidegradants, such as antioxidants and antiozonants; and peptizing agents. Depending on the intended use of the vulcanizable and vulcanized material (rubbers), the additives mentioned above are selected and commonly used in conventional amounts.

Representative antioxidants include, but are not limited to, phenylene diamine compounds (e.g., diphenyl-p-phenylenediamine), hydroquinoline compounds (e.g., anti-polymerized trimethyl dihydroquinoline), amine compounds, dithiocarbamate compounds, phenolic compounds, phosphite compounds, toluimidazole compounds, and others, such as those disclosed in The Vanderbilt Rubber Handbook (1978), Pages 344 through 346. Representative antiozonants include, but are not limited to, N-phenyl-N'-(1,3-dimethylbutyl)-p-phenylenediamine (6PPD) and N,N'-dixylene-p-phenylenediamine (DTPD). Examples of fatty acids include, but are not limited to, stearic acid, palmitic acids, oleic acid, and mixtures thereof. Microcrystalline waxes, paraffinic waxes, and combinations thereof can be used Accelerators can include, but are not limited to, sulfenamide compounds (e.g., N-cyclohexyl-2-benzothiazolesulfenamide and N-tertbutyl-2-benzothiazolesulfenamide), guanidine compounds (e.g., diphenylguanidine), dithiocarbamate compounds, thiadiazol compounds, thiazole compounds, thiourea compounds, thiuram compound, and xanthate compounds. Retarders can include, but are not limited to, phthalic anhydrides, phthalimides (e.g., N-(cyclohexylthio)phthalimide), sulfenamide compounds, and acids (e.g., benzoic acid and salicylic acid).

### C. ARTICLES

The present invention also relates to products or articles comprising the disclosed compositions, wherein the product or the article can be a tire and/or components of tires. More specifically, in one aspect, the invention relates to tires comprising the disclosed compositions, wherein the tire is selected from a motorcycle tire; a motorcycle race tire; a motorcycle rear tire; a slick tire; a pneumatic tire; and combinations thereof.; a motorcycle tire comprising two fabric reinforced breaker plies radially covered by at least one spirally wound ply strip; a motorcycle tire comprising a split tread comprising two circumferential tread shoulder portions, each comprising the rubber composition, at least a circumferential tread center portion comprising another rubber composition, wherein both rubber compositions are different from each other. In a further aspect, the tire can be free of grooves entirely surrounding the tire in a circumferential direction.

In another aspect, the article comprises a tire, such as a pneumatic tire, or a component of a tire. The tire can be a race tire, passenger tire, aircraft tire, agricultural tire, off-the-road tire, truck or bus tire, and the like. The tire can also be a radial or bias. The component of the tire can be a tread, base, sidewall, apex, chafer, sidewall insert, wirecoat, innerliner, or any combination thereof. In another aspect, the component of the tire including the composition can be a tread, base, sidewall, apex, wirecoat, ply coat, or any combination thereof. Vulcanization of the disclosed tires is generally carried out at conventional temperatures ranging from 100 °C to 200 °C or from 110 °C to 180 °C. Such tires can be built, shaped, molded and cured by various methods which are known and will be readily apparent to those having skill in such art.

In a further aspect, the tire is a motorcycle tire. In a still further aspect, the tire is a motorcycle tire where the motorcycle tire comprises two fabric reinforced breaker plies radially covered by at least one spirally wound ply strip. In a yet further aspect, the tire is a motorcycle tire where the motorcycle tire comprises a split tread comprising two circumferential tread shoulder portions, each comprising the rubber composition, such as a first rubber composition and a second rubber composition; wherein the motorcycle tire comprises a circumferential tread center portion comprising another rubber composition, such as third rubber composition, wherein each of the rubber compositions are different from each other.

FIG. 1 shows a nonlimiting embodiment of a tire tread 10 supported by reinforcing rubber plies. The tread 10 comprises a tread center portion 2 which is arranged between two outer tread shoulder portions 3. Each tread shoulder portion 3 has a tread cap shoulder portion 4 and a tread base shoulder portion 5 arranged below the tread cap shoulder portion 4. A pair of breaker plies comprises a first breaker ply 6 covered by a second breaker ply 7. Both breaker plies 6, 7 are covered by a radially wound ply strip 8 contacting the tread shoulder portion 3 (particularly the tread base shoulder portion 5) and the tread center portion 2.

In accordance with the present embodiment of the tire tread 10, the tread cap shoulder portions 4 comprise a rubber composition such as one of the experimental compounds detailed in Table 1 and Table 2.

While only the tread cap shoulder portion 4 has in this embodiment the Inventive Example compound in accordance with an embodiment of the present invention, it is also possible that the whole tread or multiple portions of the tread comprise such a rubber compound. In the present embodiment, it is preferred that the tread center portion 2 has a further rubber composition having a higher abrasion resistance than the rubber composition of the tread cap shoulder portion 4. It is also possible, that the tread shoulder portion 3 has only one compound, i.e. without a tread cap / base construction. In the present embodiment, the rubber composition of the tread base shoulder portion 5 is preferably softer than the composition of the tread cap shoulder portion 4, which helps warming up the tire to reach the desired performance as early as possible. However, such a feature is not essential to the present invention which focuses rather on the rubber composition in the cap shoulder area contacting the road when driving, particularly when driving in curves. The shown tread 10 is an example of a rear tire tread of a motorcycle race tire which does not have circumferential grooves. The circumferential direction of the tread 10 and tire is indicated in FIG. 1 by the letter "c". The radial direction of the tread 10 or tire is indicated by "r". It extends perpendicularly from the axis of rotation of the tire (not shown). An axial direction, not depicted herein, extends perpendicularly to the radial direction r and the circumferential direction c. The axial direction can also be described as lateral direction. It can also be understood as being in parallel to the axis of the tire.

The ply strip 8 is preferably a spirally wound ply strip 8 which is wound the breakers 6, 7 with an angle of less than 5° with respect to the circumferential direction of the tire (or, in other words, with respect to the equatorial plane of the tire, which is known to the person skilled in the art). Preferably, such an angle is smaller than 2° or even smaller than 1°. Sometimes reference is also made in this context to a zero-degree ply strip or overlay ply strip.

### D. PREPARATION OF DISCLOSED RUBBER COMPOSITIONS

The disclosed rubber compositions disclosed herein can be compounded by methods generally known in the rubber compounding art, such as mixing the one or more thermoplastic polyurethanes and the one or more solution-polymerized styrene butadiene rubbers. More particularly, the disclosed compositions disclosed herein can be compounded by methods generally known in the rubber compounding art, such as mixing the one or more thermoplastic polyurethanes and the one or more solution-polymerized styrene butadiene rubbers; wherein the one or more solution-polymerized styrene butadiene rubbers is present in an amount of at least 75 parts per hundred rubber (phr) of one or more solution-polymerized styrene butadiene rubbers. In a further aspect, the disclosed compositions disclosed herein can be compounded by methods generally known in the rubber compounding art, such as mixing the one or more thermoplastic polyurethanes; and the one or more solution-polymerized styrene butadiene rubbers; wherein the one or more TPU is present in an amount an amount of from 5 phr to 25 phr; and wherein the one or more solution-polymerized styrene butadiene rubbers is present in an amount of at least 75 parts per hundred rubber (phr) of one or more solution-polymerized styrene butadiene rubbers.

In a further aspect, disclosed rubber compositions disclosed herein can be compounded by methods generally known in the rubber compounding art, such as mixing the one or more thermoplastic polyurethanes; and the one or more solution-polymerized styrene butadiene rubbers; and optionally mixing at least one of a residual aromatic extract oil, a filler, such as carbon black, a resin, an antidegradant, a fatty acid, zinc oxide, a processing aid (e.g., fatty acid soaps), a curing agent, or any combination thereof. The preparation of the disclosed rubber compositions can further comprise optionally mixing one or more additive materials such as: curing or vulcanizing agents, such as sulfur donors; curing aids, such as activators; processing additives, such as oils, resins (including tackifying resins or agents), and plasticizers; fillers, such as carbon black and silica; pigments; zinc oxide; waxes; and antidegradants, such as antioxidants and antiozonants. Depending on the intended use of the vulcanizable and vulcanized material (rubbers), the additives mentioned above are selected and commonly used in conventional amounts and/or the amounts as disclosed herein above.

The compositions disclosed herein can be mixed by methods known in the rubber mixing art. For example, the ingredients can be mixed in at least two stages, namely, at least one nonproductive stage followed by a productive mix stage. In one aspect, the mixing of the uncured composition comprises only a single nonproductive stage. The final curatives including curing or vulcanizing agents may be typically mixed in the final stage, conventionally called the "productive" mix stage. In the productive mix stage, mixing typically occurs at a temperature, or ultimate temperature, lower than the mix temperature(s) of any preceding nonproductive mix stage(s). In one aspect, the mixing stages can comprise thermomechanical mixing, generally characterized by mechanical working in a mixer (e.g., internal batch mixer) or extruder for a period of time at an elevated temperature suitable to produce a rubber. The appropriate duration of the thermomechanical mixing varies as a function of the operating conditions and the volume and nature of the components. For example, the thermomechanical mixing may be from 0.5 minutes to 10 minutes.

### E. ASPECTS

The following listing of exemplary aspects supports and is supported by the invention provided herein.

Aspect 1. A rubber composition, comprising: a concentration of one or more thermoplastic polyurethanes; and at least 75 parts per hundred rubber (phr) of one or more solution-polymerized styrene butadiene rubbers.

Aspect 2. The rubber composition according to aspect 1, wherein the rubber composition further comprises from 75 phr to 150 phr of a filler.

Aspect 3. The rubber composition according to aspect 1 or aspect 2, wherein the rubber composition further comprises from 1 phr to 40 phr of a residual aromatic extract oil.

Aspect 4. The rubber composition according to any one of aspects 1-3, wherein the filler comprises at least 40 phr of carbon black.

Aspect 5. The rubber composition according to any one of aspects 1-4, wherein the rubber composition comprises from 75 phr to 100 phr of the one or more solution-polymerized styrene butadiene rubbers.

Aspect 6. The rubber composition according to aspect 5, wherein the rubber composition comprises no more than 95 phr of the one or more solution-polymerized styrene butadiene rubbers.

Aspect 7. The rubber composition according to any one of aspects 1-6, wherein the rubber composition further comprises at least one of a liquid solution-polymerized styrene butadiene rubber, a resin, an antidegradant, a fatty acid, zinc oxide, a processing aid, a curing agent, or any combination thereof.

Aspect 8. The rubber composition according to any one of aspects 1-7, wherein the concentration of the one or more thermoplastic polyurethanes is from 5 phr to 25 phr.

Aspect 9. The rubber composition according to aspect 8, wherein the concentration of one or more thermoplastic polyurethanes is from 10 phr to 20 phr.

Aspect 10. The rubber composition according to aspect 8, wherein the concentration of one or more thermoplastic polyurethanes is 15 phr.

Aspect 11. The rubber composition according to any one of aspects 1-10, wherein the one or more thermoplastic polyurethanes comprises a polyester polymer block or derivative thereof.

Aspect 12. The rubber composition according to any one of aspects 1-10, wherein the one or more thermoplastic polyurethanes comprises a polyether polymer block or derivative thereof.

Aspect 13. The rubber composition according to any one of aspects 1-12, wherein the one or more thermoplastic polyurethanes has a density from 1.00 g/cm³ to 1.30 g/cm³.

Aspect 14. The rubber composition according to aspect 13, wherein the one or more thermoplastic polyurethanes has a density from 1.05 g/cm³ to 1.25 g/cm³.

Aspect 15. The rubber composition according to any one of aspects 1-14, wherein the one or more thermoplastic polyurethanes has a tensile strength from 10 MPa to 50 MPa.

Aspect 16. The rubber composition according to any one of aspects 1-15, wherein the one or more thermoplastic polyurethanes has an elongation at break percentage from 700 percent to 1200 percent.

Aspect 17. The rubber composition according to any one of aspects 1-16, wherein the one or more thermoplastic polyurethanes has a hardness from 30 Shore A to 90 Shore A.

Aspect 18. The rubber composition according to aspect 17, wherein the one or more thermoplastic polyurethanes has a hardness from 30 Shore A to 60 Shore A.

Aspect 19. The rubber composition according to any one of aspects 1-18, wherein the rubber composition is cured.

Aspect 20. A tire, comprising the rubber composition of any one of Aspects 1-19.

Aspect 21. The tire according to aspect 20, wherein the tire is one or more of: a motorcycle tire; a motorcycle race tire; a motorcycle rear tire; a slick tire; or a pneumatic tire.

Aspect 22. The tire according to aspect 21, wherein the tire is free of grooves entirely surrounding the tire in a circumferential direction.

Aspect 23. The tire according to aspect 21, wherein the tire is a motorcycle tire.

Aspect 24. The tire according to aspect 23, wherein the motorcycle tire comprises two fabric reinforced breaker plies radially covered by at least one spirally wound ply strip.

Aspect 25. The tire according to aspect 23, wherein the motorcycle tire comprises a split tread comprising two circumferential tread shoulder portions, each comprising the rubber composition, at least a circumferential tread center portion comprising another rubber composition, wherein both rubber compositions are different from each other.

### F. EXAMPLES

Unless indicated otherwise, parts are parts by weight, temperature is in °C or is at ambient temperature, and pressure is at or near atmospheric.

### 1. EXEMPLARY RUBBER COMPOSITIONS

Six rubber compositions comprising solution-polymerized styrene butadiene rubbers are discussed herein. The rubber compositions comprise three control compositions (A1, B1, and C1) and corresponding experimental compositions (A2, B2, and C2) as outlined in Table 1. Notably, in comparison to their corresponding control compositions, the Experimental compositions all include 15 phr of a TPU in place of 15 phr of SSBR.

**Table 1**

| Overview of control compositions (A1, B1, C1), their corresponding experimental compositions (A2, B2, C2), and major formulation changes between the two. | | |
|---|---|---|
| Control Compositions | Experimental Composition | Formulation Change |
| A1 (exemplary hard rear composition) | A2 | 15 phr TPU in place of SSBR |
| B1 (exemplary medium rear composition) | B2 | 15 phr TPU in place of SSBR |
| C1 (exemplary soft rear composition) | C2 | 15 phr TPU in place of SSBR |

Table 2 provides more detailed formulations for each composition. One notable difference between the control compositions and the experimental compositions (highlighted in Table 1) includes the presence of a TPU in the experimental compositions in place of part of one of the solution-polymerized styrene butadiene rubbers. The SSBRs are oil extended such that the combined total of SSBRs present in each composition is 100 phr, and the remaining amount is an extender oil. For example, for experimental composition A2, 116.68 total phr of the first and second SSBR refers to a total elastomer content of 100 phr and an extender oil content of 16.68 phr.

**Table 2**

| Formulations (in phr) for control compositions A1, B1, and C1 and experimental compositions of A2, B2, and C2. | | | | | | |
|---|---|---|---|---|---|---|
| Ingredients | Control Compositions | | | Experimental Compositions | | |
| | A1 | B1 | C1 | A2 | B2 | C2 |
| SSBR¹ | 110.00 | 110.0 | 110.0 | 89.38 | 89.38 | 89.38 |
| SSBR² | 27.50 | 27.50 | 27.50 | 27.50 | 27.50 | 27.50 |
| TPU³ | -- | -- | -- | 15.00 | 15.00 | 15.00 |
| Liquid Polymer⁴ | 45.00 | 7.50 | 7.50 | 45.00 | 7.50 | 7.50 |
| Liquid Polymer⁵ | -- | 37.50 | 37.50 | -- | 37.50 | 37.50 |
| Carbon Black⁶ | 92.50 | 92.50 | 102.00 | 92.50 | 92.50 | 102.00 |
| Oil⁷ | -- | -- | 20.00 | 4.00 | 4.00 | 24.00 |
| Resin⁸ | 5.00 | 5.00 | 5.00 | 5.00 | 5.00 | 5.00 |
| Resin⁹ | 5.00 | 5.00 | -- | 5.00 | 5.00 | -- |
| Antidegradant¹⁰ | 4.00 | 4.00 | 3.92 | 4.00 | 4.00 | 3.92 |
| Processing Aid¹¹ | 2.00 | 2.00 | 2.00 | 2.0 | 2.00 | 2.00 |
| Stearic Acid | 2.62 | 2.62 | 1.31 | 2.62 | 2.62 | 1.31 |
| Zinc Oxide | 2.70 | 2.70 | 4.06 | 2.70 | 2.70 | 4.06 |
| Sulfur | 1.92 | 1.53 | 3.06 | 1.92 | 1.53 | 3.06 |
| Accelerator¹² | 6.00 | 7.50 | 3.50 | 6.00 | 7.50 | 3.50 |
| Accelerator¹³ | 1.00 | 1.43 | -- | 1.00 | 1.43 | -- |

| | | | | | | |
|---|---|---|---|---|---|---|
| ¹solution-polymerize styrene butadiene rubber having 40% styrene and 39% vinyl and a glass transition temperature (Tg) of -5 °C ²solution-polymerized styrene butadiene rubber having 40% styrene and 14% vinyl and a Tg of -29 °C ³TPU having a hardness of 45 Shore A ⁴liquid styrene butadiene rubbers including at least one rubber having a Tg of -22 °C ⁵liquid styrene butadiene rubbers including at least one rubber having a Tg of -21 °C ⁶carbon black having an iodine adsorption number of 202 g/kg determined by ASTM D1510 or equivalent ⁷RAE oils ⁸alkylphenol resin ⁹coumarone indene resin ¹⁰dihydroquinoline antidegradants and phenylenediamine antidegradants ¹¹fatty acid soaps ¹²N-tert-butylbenzothiazole-2-sulphenamide ¹³tetrabenzylthiuram disulfide | | | | | | |

### 2. EXEMPLARY DISCLOSED RUBBER COMPOSITIONS AND EXEMPLARY PROPERTIES.

Physical properties and track performance results for the six rubber compositions (A1, B1, C1, A2, B2, and C2) are discussed herein. As seen in Table 3, experimental compositions A2, B2, and C2 showed an increase in hysteresis (indicated by an increased Tan δ value) and an increase in loss compliance (LC) compared to their respective control compositions A1, B1, and C1. These values were determined using a rubber process analyzer (RPA). This change in hysteresis and LC can be related to the general improvements in grip level and lap time shown in Table 3 for the experimental compositions compared to the control compositions. Additionally, the modulus values for the experimental compositions at 300% elongation (i.e., M300) remain relatively stable compared to their corresponding control compositions: decreasing by no more than 3% for A2 and B2 and increasing for C2. This indicates that wear appearance of tires produced using the experimental composition should be relatively similar to that of tires produced using the control compositions. Overall, the addition of TPU in the experimental compositions produces tires with better balance between wear and dry grip performance.

**Table 3**

| Physical properties for control and experimental compositions. Values for experimental compositions A2, B2, and C2 are normalized compared to their respective control compositions of A1, B1, and C1. | | | | | | | | |
|---|---|---|---|---|---|---|---|---|
| **Physical Property** | **Test Temperature** | **Test Method** | **A1** | **A2** | **B1** | **B2** | **C1** | **C2** |
| Tensile Strength | 23°C | ASTM D412 | 100 | 83 | 100 | 85 | 100 | 85 |
| Elongation at Break | 23°C | | 100 | 91 | 100 | 94 | 100 | 87 |
| M300 | 23°C | | 100 | 97 | 100 | 97 | 100 | 113 |
| Shore A | 23°C | ASTM D2240 | 100 | 102 | 100 | 102 | 100 | 114 |
| Shore A | 100°C | | 100 | 95 | 100 | 98 | 100 | 103 |
| RPA - G* (50%) | 100°C | ASTM D5289 | 100 | 86 | 100 | 88 | 100 | 99 |
| RPA - Tan δ (50%) | 100°C | | 100 | 113 | 100 | 109 | 100 | 121 |
| RPA - LC (50%) | 100°C | | 100 | 131 | 100 | 120 | 100 | 121 |
| Tg | [°C] | ASTM D3418 | 5 | 4 | 6 | 4 | 4 | 2 |

Table 4 shows track evaluation results for the motorcycle tires including the control and experimental compositions. The experimental compositions exhibit similar or better subjective ratings and lap times compared to their corresponding control compositions.

**Table 4**

| Track evaluation results for motorcycle tires including control compositions A1, B1, and C1 and experimental compositions A2, B2, and C2. | | | | | | |
|---|---|---|---|---|---|---|
| | A1 | A2 | B1 | B2 | C1 | C2 |
| Entry Stability | | 5 | 5 | 5 | 8 | 8 |
| Entry Grip | 5 | 5 | 5 | 6 | 6 | 8 |
| Mid-Corner Grip | 4 | 5 | 5 | 4 | 5 | 7 |
| Exit Stability | 5 4 | 5 | 5 | 6 | 7 | 7 |
| Exit Grip | 5 | 5 | 5 | 6 | 6 | 8 |
| Confidence | 4 | 5 | 5 | 5 | 6 | 8 |
| Overall | 4 | 5 | 5 | 6 | 6 | 8 |
| Best Lap Time | 02:08.1 | 02:07.5 | 02:06.5 | 02:05.6 | 02:05.5 | 02:05.4 |

## Claims

1. A rubber composition comprising one or more thermoplastic polyurethanes and at least 75 parts per hundred rubber (phr) of one or more solution-polymerized styrene butadiene rubbers.

2. The rubber composition according to claim 1, wherein the rubber composition further comprises from 75 phr to 150 phr of a filler, preferably at least 40 phr of carbon black.

3. The rubber composition according to claim 1 or 2, wherein the rubber composition further comprises from 1 phr to 40 phr of a residual aromatic extract oil.

4. The rubber composition according to at least one of the previous claims, wherein the rubber composition comprises from 75 phr to 100 phr of the one or more solution-polymerized styrene butadiene rubbers; and/or wherein the rubber composition comprises no more than 95 phr of the one or more solution-polymerized styrene butadiene rubbers.

5. The rubber composition according to at least one of the previous claims, wherein the amount or concentration of the one or more thermoplastic polyurethanes is from 5 phr to 25 phr.

6. The rubber composition according at least one of the previous claims, wherein the one or more thermoplastic polyurethanes comprises a polyester polymer block or derivative thereof and/or a polyether polymer block or derivative thereof.

7. The rubber composition according to at least one of the previous claims, wherein the one or more thermoplastic polyurethanes has a hardness from 30 Shore A to 90 Shore A.

8. The rubber composition according to at least one of the previous claims, wherein the one or more thermoplastic polyurethanes has a density from 1.00 g/cm³ to 1.30 g/cm³ or from 1.05 g/cm³ to 1.25 g/cm³.

9. The rubber composition according to at least one of the previous claims, wherein the one or more thermoplastic polyurethanes has a tensile strength from 10 MPa to 50 MPa.

10. The rubber composition according to at least one of the previous claims, wherein the one or more thermoplastic polyurethanes has an elongation at break percentage from 700 percent to 1200 percent.

11. The rubber composition according to at least one of the previous claims, wherein the rubber composition further comprises at least one of a liquid solution-polymerized styrene butadiene rubber, a resin, an antidegradant, a fatty acid, zinc oxide, a processing aid, a curing agent, or any combination thereof.

12. The rubber composition according to at least one of the previous claims, wherein the rubber composition is cured.

13. A tire, comprising the rubber composition of at least one of the previous claims.

14. The tire according to claim 13, wherein the tire is one or more of:
a motorcycle tire;
a motorcycle race tire;
a motorcycle rear tire;
a slick tire;
a pneumatic tire;
a tire free of grooves entirely surrounding the tire in a circumferential direction;
a motorcycle tire comprising two fabric reinforced breaker plies radially covered by at least one spirally wound ply strip; or
a motorcycle tire comprising a split tread comprising two circumferential tread shoulder portions, each comprising the rubber composition, at least a circumferential tread center portion comprising another rubber composition, wherein both rubber compositions are different from each other.

15. The tire according to claim 15, wherein the tire is a motorcycle tire or a motorcycle race tire.
